# FASCICULE DE BREVET EUROPEEN

(11) **EP 0 559 799 B1**
(45) Date de publication et mention de la délivrance du brevet: **01.06.1994**
(21) Numéro de dépôt: 92901985.9
(22) Date de dépôt: 27.11.1991
(51) Int. Cl.: G01N 27/90, B22D 11/12

(54) **DISPOSITIF DE DETECTION DES CRIQUES LONGITUDINALES SUR DES BRAMES, NOTAMMENT SUR DES BRAMES D'ACIER**
VORRICHTUNG ZUR RISSPRÜFUNG VON BRAMMEN, INSBESONDERE STAHLBRAMMEN
DEVICE FOR DETECTING LONGITUDINAL SLITS ON SLABS, PARTICULARLY STEEL SLABS

(30) Priorité: 29.11.1990 FR 9014953
(43) Date de publication de la demande: 15.09.1993
(73) Titulaire: SOLLAC, 92800 Puteaux (FR)
(72) Inventeur: ANTOINE, Claude, F-13960 Sausset-les-Pins (FR); DEPEYRIS, Martine, F-13015 Marseille (FR)
(74) Mandataire: Lanceplaine, Jean-Claude
(86) Numéro de dépôt international: FR9100942
(87) Numéro de publication internationale: WO9209887

(56) Documents cités:
- EP-A- 0 088 069
- EP-A-03 900 09

## Description

La présente invention a pour objet un dispositif de détection des criques longitudinales sur des brames, notamment sur des brames d'acier, sortant d'une coulée continue.

On sait que la coulée continue présente des difficultés qui sont dûes à l'apparition de défauts de surface ou criques sur les faces des brames. Ces défauts doivent absolument être réparés avant que les brames ne soient étirées et laminées.

La solution consistant à retraiter systématiquement toutes les brames est trop honéreuse et il est donc nécessaire de déceler les criques sur les brames à la sortie de la coulée continue pour dévier vers un retraitement ultérieur uniquement celles qui présentent des criques nécessitant un tel traitement.

Ces criques sont longitudinales par rapport à l'axe de la brame et peuvent se situer aussi bien sur les faces latérales ou sur les faces principales de la brame.

On connait un dispositif de détection des criques sur les brames au moyen de sondes à courants de Foucault qui comportent une bobine d'induction alimentée en tension alternative et des moyens pour détecter des variations de ladite tension indiquant la présence d'une crique.

Ce dispositif comporte de part et d'autre du passage des brames, une sonde verticale qui est maintenue à proximité d'une arête et plusieurs sondes horizontales, situées à des niveaux différents qui sont maintenues à proximité d'une face latérale de la brame.

La présence d'une crique modifie sensiblement l'inpédance et les courants de Foucault et entraine une variation de l'amplitude de la tension d'excitation de la bobine et du déphasage entre la tension et le courant d'éxcitation de ladite bobine.

L'analyse de la tension d'excitation de la bobine par des circuits électroniques permet de fournir un signal électique qui présente, en présence d'une crique, des pics d'amplitude.

Mais, ce dispositif détecte uniquement des criques situées sur les petites faces des brames et ne permet pas de déceler la présence de criques longitudinales sur les faces principales des brames.

Le document D2= EP-A- 0 88 069 décrit un dispositif de détection, à l'aide de courants de Foucault, de défauts sur des brames.

L'objectif de la présente invention est de procurer un dispositif de détection des criques longitudinales sur les faces principales d'une brame chaude sortant d'une coulée continue en vue de les dévier vers un retraitement ultérieur.

Cet objectif est atteint en utilisant un dispositif de détection comprenant des sondes de mesure à courants de Foucault et qui est conçu pour que, quelles que soient les déformations de la brame et la rugosité de la surface, l'extrémité desdites sondes soit séparée de la surface de la brame par une distance constante très faible, sans que cela n'entraine une usure trop importante de ces sondes qui doivent pouvoir résister à l'usure et à l'abrasion pendant toute une campagne de coulée continue afin que l'usure des sondes n'entraine pas un arrêt de la coulée continue.

Les sondes de mesure doivent être tenues et guidées à une faible distance de la surface des brames sans intercaler entre l'extrémité de la bobine et ladite surface aucune pièce métallique qui perturberait le circuit magnétique.

La largeur de l'entrefer doit rester constante quelle que soit la forme et la rugosité de la surface à contrôler, car des variations très faibles de la largeur de l'entrefer entraineraient des variations du coefficient d'induction mutuelle qui risqueraient d'entraîner des variations du signal électrique ayant des amplitudes du même ordre que les variations dûes aux criques d'où un risque de dévier, par erreur, des brames exemptes de défauts.

La nécessité de maintenir un entrefer de largeur constante entre la sonde de mesure et la surface de la brame entraine la nécessité de monter les sondes de mesure sur des supports mobiles qui suivent fidèlement toutes les sinuosités de la surface et qui s'effacent temporairement devant les aspérités à front raide.

La présente invention permet d'atteindre ces objectifs et a pour objet un dispositif de détection des criques longitudinales sur des brames, notamment sur des brames d'acier, sortant d'une coulée continue, au moyen de sondes de mesure à courants de Foucault alimentées en tension alternative et de moyens pour détecter des variations de ladite tension indiquant la présence d'une crique, comportant de chaque côté des faces principales de la brame, une unité de détection de criques portant chacune une sonde de mesure qui est animée d'un mouvement alternatif transversal par rapport au sens de défilement de la brame, caractérisé en ce qu'il comporte en outre, des moyens de maintien de la sonde de mesure de chaque unité de détection à une distance constante par rapport à la face principale correspondante de la brame.

Selon d'autres caractéristiques de l'invention :
- chaque unité de détection comporte des moyens de régulation de la position de la sonde de mesure en fonction de l'état de surface de la face principale correspondante de la brame,
- chaque unité de détection est formée par un bras perpendiculaire au sens de défilement de la brame et s'étendant sur toute la largeur de ladite brame, le bras de la première unité de détection étant disposé au-dessus de la face principale supérieure de la brame et le bras de la seconde unité de détection étant disposé au-dessous de la face principale inférieure de ladite brame,
- chaque bras est monté déplaçable, selon une direction perpendiculaire aux faces principales de la brame, sur un bâti qui est mobile selon une direction perpendiculaire au sens de défilement de la brame pour amener lesdits bras de part et d'autre des faces principales de ladite brame,
- chaque bras est relié au bâti par des biellettes formant un parallélogramme articulé,
- la sonde de mesure de chaque unité de détection est entrainée transversalement par rapport au sens de défilement de la brame par un arbre d'un ensemble de trancanage, ledit arbre étant disposé longitudinalement dans le bras correspondant de ladite unité de détection et ledit ensemble de trancanage comprenant un moteur à vitesse constante d'entraînement en rotation de l'arbre par l'intermédiaire d'un boîtier d'inversion du sens de rotation dudit arbre,
- les moyens de maintien de chaque sonde de mesure à une distance constante par rapport à la face principale correspondante de la brame sont constitués par un vérin simple effet reliant entre eux les deux bras des unités de détection et exerçant une traction continue sur lesdits bras et par un organe de butée monté sur chaque bras et destiné à venir en contact avec la face principale correspondante de la brame,
- les moyens de régulation de la position de chaque sonde de mesure comprennent un capteur monté sur le bras correspondant de l'unité de détection et disposé en regard de la face principale de la brame et par un vérin électromécanique de contre-poussée commandé par ledit capteur,
- ledit capteur est fixe et est constitué par une sonde à courants de Foucault,
- le vérin électromécanique de contre-poussée comporte une partie fixe solidaire du bâti et une partie mobile reliée et agisssant sur le bras de l'unité de détection comprenant le capteur de commande dudit vérin,
- la sonde de mesure disposée au-dessus de la face principale supérieure est associée à deux détecteurs des aspérités sur ladite face principale et disposés chacun de part et d'autre de ladite sonde de mesure par rapport au sens de déplacement de celle-ci,
- chaque détecteur commande par l'intermédiaire du vérin à simple effet l'ouverture des bras des unités de détection,
- le bras disposé au-dessus de la face principale supérieure de la brame comporte à son extrémité proche du bâti un contrepoids.

D'autres caractéristiques et avantages de l'invention apparaîtront au cours de la descripton qui va suivre, faite en se référant aux dessins annexés donnés uniquement à titre d'exemple et sur lesquels :
- la Fig. 1 est une vue d'ensemble schématique du dispositif de détection conforme à l'invention, les unités de détection étant en position écartée de la brame,
- la Fig. 2 est une vue en coupe selon la ligne 2-2 de la Fig. 1,
- la Fig. 3 est une une vue identique à la Fig. 1 avec les unités de détection en position rapprochée de la brame pour la détection des criques longitudinales,
- la Fig. 4 est une vue schématique en perspective montrant la trajectoire d'une sonde de mesures sur la face principale supérieure d'une brame.

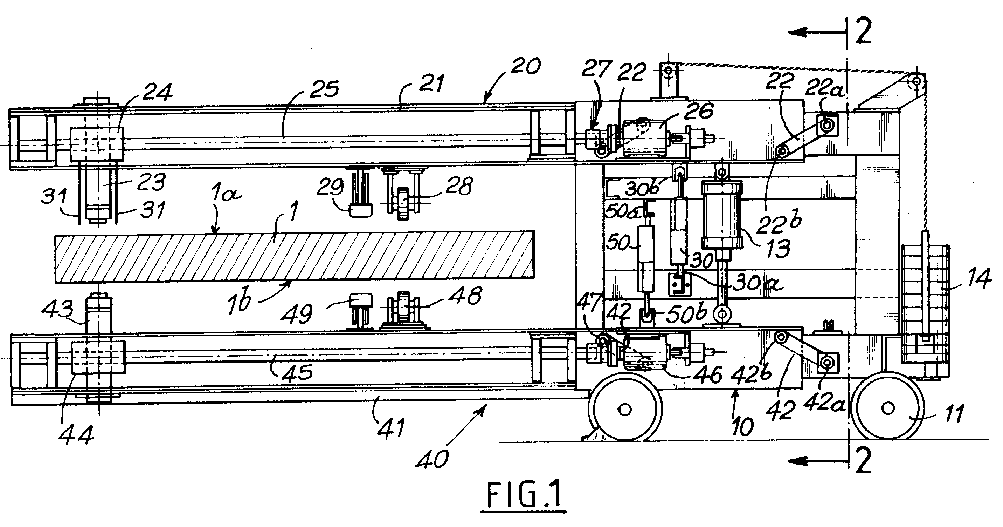

Sur les Figs. 1 à 3, on a représenté une brame 1, notamment en acier, sortant d'une coulée continue et circulant sur des rouleaux 2.

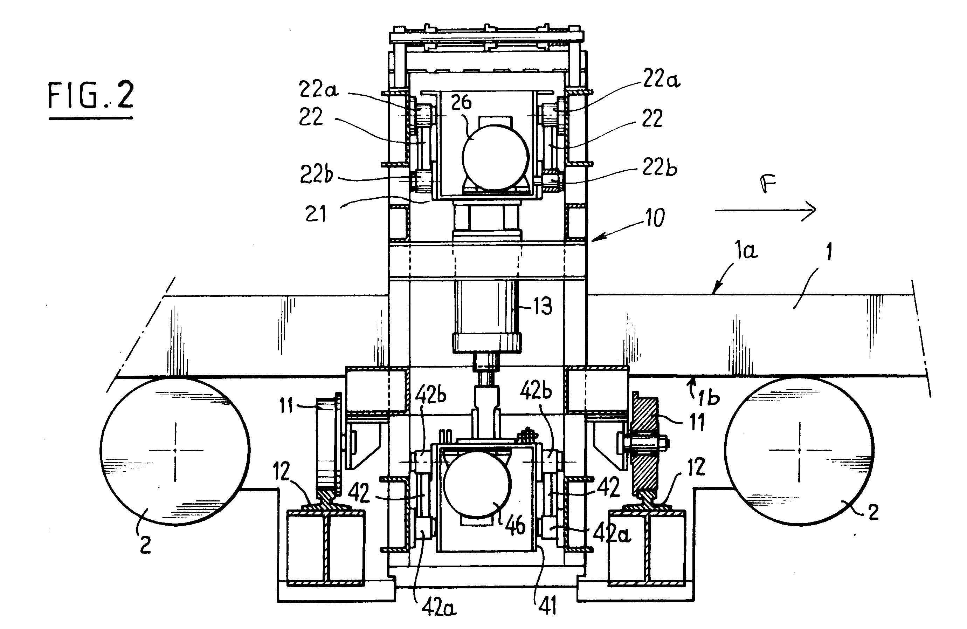

Le sens de défilement de la brame est représenté par la flèche F (Fig. 2). Cette brame 1 a une section sensiblement rectangulaire.

Le dispositif de détection selon l'invention permet de déceler les criques longitudinales simultanément sur les faces principales 1a et 1b de la brame 1.

Ce dispositif de détection représenté aux Figs. 1 à 3 comporte un bâti 10 monté mobile, selon une direction perpendiculaire au sens de défilement de la brame 1, sur des roues 11 qui se déplacent sur des rails 12.

Le dispositif comprend deux unités de détection respectivement 20 et 40 identiques, une unité de détection supérieure 20 s'étendant au-dessus de la face supérieure 1a de la brame 1 et une unité de détection inférieure 40 s'étendant au-dessous de la face inférieure 1b de ladite brame 1.

L'unité de détection supérieure 20 est formée par un bras 21 perpendiculaire au sens de défilement de la brame 1 et s'étendant sur toute la largeur de ladite brame lorsque le dispositif est en fonctionnement.

Le bras 21 est monté déplaçable, selon une direction perpendiculaire aux faces principales 1a et 1b de la brame 1 sur le bâti 10 par l'intermédiaire de quatre biellettes 22 formant un parallélogramme articulé (Fig. 2).

Chaque biellette 22 a une extrémité 22a montée articulée sur le bâti 10 et une extrémité opposée 22b montée articulée sur le bras 21.

Le bras supérieur 21 porte une sonde de mesure 23 qui est animée d'un mouvement alternatif transversal par rapport au sens de défilement de la brame 1 et dirigée vers la face principale 1a de ladite brame.

A cet effet, la sonde de mesure 23 est portée par une bague 24 montée sur un arbre 25 d'un ensemble de trancanage, ledit arbre étant disposé longitudinalement dans le bras 21. Cet ensemble de trancanage comprend également un moteur à vitesse constante 26 d'entraînement en rotation de l'arbre 25 par l'intermédiaire d'un boîtier 27 d'inversion de sens de rotation dudit arbre de façon à imprimer à la sonde de mesure 23 un mouvement de va et vient par rapport à la face principale 1a de la brame 1.

De manière analogue l'unité de détection inférieure 40 est formée par un bras 41 perpendiculaire au sens de défilement de la brame 1 et s'étendant sur toute la largeur de ladite brame.

Le bras 41 est monté déplaçable, selon une direction perpendiculaire aux faces principales 1a et 1b de la brame 1, sur le bâti 10 par l'intermédiaire de quatre biellettes 42 formant un parallélogramme articulé (Fig. 2).

Chaque biellette 42 a une extrémité 42a montée articulée sur le bâti 10 et une extrémité opposée 42b montée articulée sur le bras 41.

Le bras supérieur 41 porte une sonde de mesure 43 qui est animée d'un mouvement alternatif transversal par rapport au sens de défilement de la brame 1 et dirigée vers la face principale 1b de ladite brame.

La sonde de mesure 43 est portée par une bague 44 montée sur un arbre 45 d'un ensemble de trancanage, ledit arbre étant disposé longitudinalement dans le bras 41.

Cet ensemble de trancanage comprend également un moteur à vitesse constante 46 d'entraînement en rotation de l'arbre 45 par l'intermédiaire d'un boîtier 47 d'inversion du sens de rotation dudit arbre de façon à imprimer à la sonde de mesure 43 un mouvement de va et vient par rapport à la face principale inférieure 1b de la brame 1.

D'autre part, le dispositif comporte des moyens de maintien des sondes de mesure 23 et 43 à une distance constante par rapport aux faces principales respectivement 1a et 1b de la brame 1.

Ces moyens sont constitués par un vérin simple effet 13 et par deux organes de butée respectivement 28 et 48, un organe de butée 28 porté par le bras 21 et destiné à venir en contact avec la face principale supérieure 1a et un organe de butée 48 porté par le bras 41 et destiné à venir en contact avec la face principale inférieure 1b.

Le vérin simple effet 13 est disposé transversalement par rapport aux bras 21 et 41 et relie ces deux bras entre eux. Ce vérin 13 est maintenu constamment sous pression et excerce une traction continue sur les bras 21 et 41.

Les organes de butée 28 et 48 sont constitués par exemple par des roulettes.

Par ailleurs, chaque unité de détection 20 et 40 comporte des moyens de régulation de la position des sondes de mesure 23 et 43 en fonction de l'état de surface des faces principales 1a et 1b de la brame 1.

Pour l'unité de détection 20, ces moyens comprennent, d'une part, un capteur fixe 29, par exemple à courants de Foucault, monté sur le bras 21 et disposé en regard de la face principale supérieure 1a et, d'autre part, un vérin électromécanique de contre-poussée 30 commandé par ledit capteur 29.

Le vérin de contre-poussée 30 comporte une partie fixe 30a solidaire du bâti 10 et une partie mobile 30b reliée et agissant sur le bras 21 à l'encontre de la traction exercée par le vérin 13.

Il en est de même pour l'unité de détection 40 qui comporte, d'une part, un capteur fixe 49, par exemple à courants de Foucault, monté sur le bras 41 et disposé en regard de la face principale inférieure 1b et, d'autre part, un vérin électromécanique de contre-poussée 50 commandé par ledit capteur 49.

Le vérin de contre-poussée 50 comporte une partie fixe 50a solidaire du bâti 10 et une partie mobile 50b reliée et agissant sur le bras 41 à l'encontre de la traction exercée par le vérin 13.

La sonde de mesure 23 est associée à deux détecteurs 31 des aspérités sur la face principale 1a de la brame 1 et disposés chacun de part et d'autre de ladite sonde de mesure 23 par rapport au sens de déplacement de celle-ci.

Les deux détecteurs 31 se déplacent en même temps que la sonde de mesure 23 et sont constitués chacun par exemple par un balancier qui, au moment où il rencontre une aspérité, commande par l'intermédiaire du vérin à simple effet 13, l'ouverture des bras 21 et 41 des unités de détection 20 et 40.

L'extrémité du bras 21 proche du bâti 10 est reliée à un contrepoids 14 permettant d'obtenir une ouverture simultanée des deux bras 21 et 41.

Le dispositif fonctionne de la manière suivante :

Tout d'abord les bras 21 et 41 sont ouverts, le bras 21 par l'intermédiaire du contrepoids 14 et le bras 41 par son propre poids.

Le bâti 10 est déplacé sur les rails 12 de façon à positionner les bras 21 et 41 de part et d'autre du passage de la brame 1 comme représenté sur la Fig. 1.

Le vérin 13 est actionné ce qui provoque la fermeture des bras 21 et 41, les organes de butée 28 et 48 entrant en contact avec les faces principales respectivement 1a et 1b de la brame.

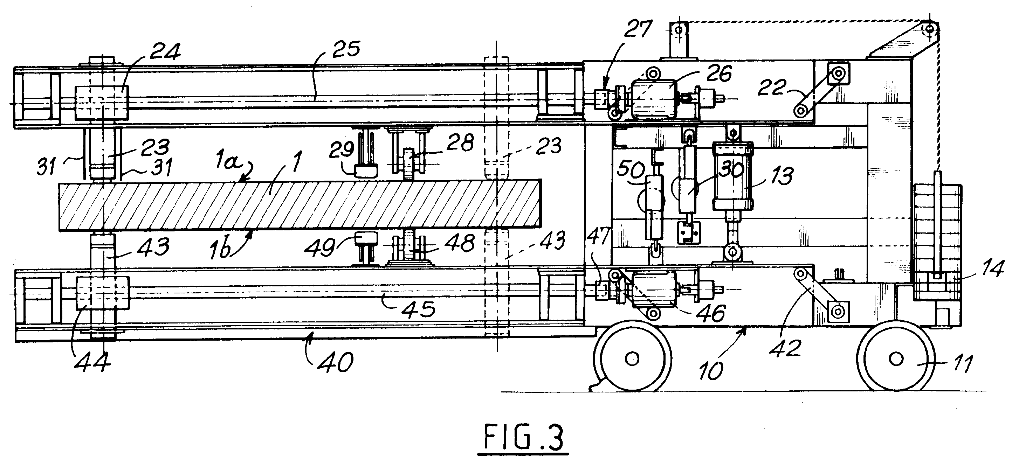

Le vérin 13 exerce une traction continue sur les bras 21 et 41 de façon à maintenir les sondes de mesure 23 et 43 à environ 2mm des faces principales de la brame (Fig. 3).

Ces sondes de mesure 23 et 43 sont animées d'un mouvement alternatif par rapport au sens de défilement de la brame 1, par l'intermédiaire des arbres 25 et 45, des moteurs 26 et 46 et des boîtiers 27 et 47.

Les sondes de mesure 23 et 43 balaient les faces principales 1a et 1b à une vitesse de 1 mètre par seconde environ et la brame 1 se déplace à environ 1,4 mètre par minute.

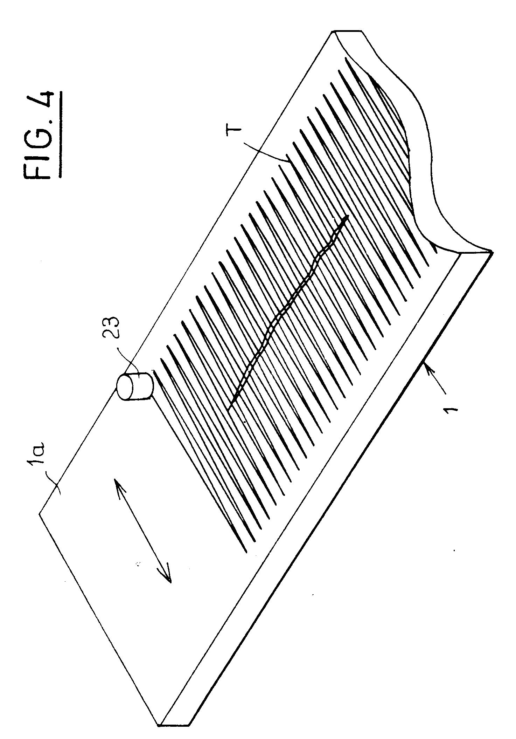

Par conséquent, la trajectoire T de la sonde de mesure 23 sur la face principale 1a a la forme d'une sinusoïde (Fig. 4).

Il en est de même pour la trajectoire de la sonde de mesure 43 sur la face principale 1b.

La présence d'une crique modifie sensiblement l'inpédance et les courants de Foucault et entraine une variation de l'amplitude de la tension d'excitation des sondes de mesure.

L'analyse de la tension d'excitation par des circuits électroniques permet de fournir un signal électrique qui présente, en présence d'une crique, des pics d'amplitude permettant donc d'obtenir un signal de détection d'une crique.

Le capteur 29 régule la position de la sonde de mesure 23 en fonction des ondulations longitudinales de la face supérieure 1a en commandant le vérin de contre-poussée 30 qui déplace verticalement le bras 21 contre la traction excercée par le vérin 13.

Le capteur 49 régule la position de la sonde 43 en fonction des ondulations longitudinales de la face inférieure 1b en commandant le vérin de contre-poussée 40 qui déplace verticalement le bras 41 contre la traction exercée par le vérin 13.

Si au cours du déplacement alternatif de la sonde de mesure 23, l'un des détecteurs 31 rencontre une aspérité d'une hauteur supérieure à 1,5mm sur la face principale 1a, ce détecteur commande immédiatement l'ouverture des bras 21 et 41 par l'intermédiaire du vérin 13 ce qui évite toute détérioration des sondes de mesure.

Les sondes de mesure sont maintenues à une distance constante des faces principales de la brame et cette faible distance est nécessaire pour que la sensibilité aux criques soit grande.

Par ailleurs, les sondes de mesure sont refroidies et maintenues à une température de l'ordre de 20°C malgré la proximité de la brame dont la température est supérieure à 300°C.

Le dispositif selon l'invention permet donc de détecter simultanément les criques longitudinales sur les deux faces principales de la brame, et cela pour différentes largeurs de brames.

## Revendications

1. Dispositif de détection des criques longitudinales sur des brames d'acier (1), sortant d'une coulée continue, au moyen de sondes de mesure (23, 43) à courants de Foucault alimentées en tension alternative et de moyens pour détecter des variations de ladite tension indiquant la présence d'une crique, comportant, de chaque côté des faces principales (1a, 1b) de la brame (1), une unité de détection (20, 40) de criques portant chacune une sonde de mesure (23, 43) qui est animée d'un mouvement alternatif transversal par rapport au sens de défilement de la brame (1), caractérisé en ce qu'il comporte, en outre, des moyens (13) de maintien de la sonde de mesure (23, 43) de chaque unité de détection (20, 40) à une distance constante par rapport à la face principale (1a, 1b) correspondante de la brame (1).

2. Dispositif selon la revendication 1, caractérisé en ce que chaque unité de détection (20, 40), comporte des moyens (29, 30, 49, 50) de régulation de la position de la sonde de mesure (23, 43) en fonction de l'état de surface de la face principale (1a, 1b) correspondante de la brame (1).

3. Dispositif selon les revendications 1 et 2, caractérisé en ce que chaque unité de détection (20, 40) est formée par un bras (21, 41) perpendiculaire au sens de défilement de la brame (1) et s'étendant sur toute la largeur de ladite brame, le bras (21) de la première unité de détection (20) étant disposé au-dessus de la face principale supérieure (1a) de la brame (1) et le bras (41) de la seconde unité de détection (40) étant disposé au- dessous de la face principale inférieure (1b) de ladite brame.

4. Dispositif selon l'une quelconque des revendications précédentes, caractérisé en ce que chaque bras (21 41) est monté déplaçable, selon une direction perpendiculaire aux faces principales (1a, 1b) de la brame (1), sur un bâti (10) qui est mobile selon une direction perpendiculaire au sens de défilement de la brame (1) pour amener lesdits bras (21, 41) de part et d'autre des faces principales (1, 1b) de ladite brame.

5. Dispositif selon la revendication 4, caractérisé en ce que chaque bras (21, 41) est relié au bâti (10) par des biellettes (22, 42) formant un parallélogramme articulé.

6. Dispositif selon l'une quelconque des revendications précédentes, caractérisé en ce que la sonde de mesure (23, 43) de chaque unité de détection (20, 40) est entrainée transversalement par rapport au sens de défilement de la brame (1) par un arbre (25, 45) d'un ensemble de trancanage, ledit arbre étant disposé longitudinalement dans le bras (21, 41) correspondant de ladite unité de détection (20, 40) et ledit ensemble de trancanage comprenant un moteur à vitesse constante (26, 46) d'entraînement en rotation de l'arbre (25, 45) par l'intermédaire d'un boitier (27, 47) d'inversion du sens de rotation dudit arbre.

7. Dispositif selon l'une quelconque des revendications 1 à 5, caractérisé en ce que les moyens de maintien de chaque sonde de mesure (23, 43) à une distance constante par rapport à la face principale (1a, 1b) correspondante de la brame (1) sont constitués par un vérin (13) à simple effet reliant entre eux les deux bras (21, 41) des unités de détection (20, 40) et exerçant une traction continue sur lesdits bras et par un organe de butée (28, 48) monté sur chaque bras (21, 41) et destiné à venir en contact avec la face principale (1a, 1b) correspondante de la brame (1).

8. Dispositif selon l'une quelconque des revendications 1 à 5, caractérisé en ce que les moyens de régulation de la position de chaque sonde de mesure (23, 43) comprennent un capteur (29, 49) monté sur le bras (21, 41) correspondant de l'unité de détection (20, 40) et disposé en regard de la face principale (1a, 1b) de la brame (1) et par un vérin électromécanique de contre-poussée (30, 50) commandé par ledit capteur.

9. Dispositif selon la revendication 8, caractérisé en ce que ledit capteur (29, 49) est fixe et est constitué par une sonde à courants de Foucault.

10. Dispositif selon la revendication 8, caractérisé en ce que le vérin de contre-poussée (30, 50) comporte une partie fixe (30a, 50a) solidaire du bâti (10) et une partie mobile (30b, 50b) reliée et agisssant sur le bras (21, 41) de l'unité de détection (20, 40) comprenant le capteur (29, 49) de commande dudit vérin.

11. Dispositif selon l'une quelconque des revendications précédentes, caractérisé en ce que la sonde de mesure (23) disposée au-dessus de la face principale supérieure (1a) est associée à deux détecteurs (31) des aspérités sur ladite face principale et disposés de part et d'autre de ladite sonde de mesure (23) par rapport au sens de déplacement de celle-ci.

12. Dispositif selon la revendication 11, caractérisé en ce que chaque détecteur (31) commande par l'intermédiaire du vérin à simple effet (13) l'ouverture des bras (21, 41) des unités de détection (20, 40).

13. Dispositif selon la revendication 3, caractérisé en ce que le bras (21) disposé au-dessus de la face principale supérieure (1a) de la brame comporte à son extrémité proche du bâti (10) un contrepoids (14).

## Patentansprüche

1. Vorrichtung zur Feststellung von Längsrissen auf aus einem Stranggießen hervorgehenden Strahlbramen (1) mittels wechselspannungsgespeister Wirbelstrommeßsonden (23, 43) und Mitteln zur Feststellung von Änderungen dieser Spannung, die das Vorhandensein eines Risses anzeigen, wobei die Vorrichtung auf jeder Seite der Hauptflächen (1a, 1b) der Bramme (1) eine Rißnachweiseinheit (20, 40), von denen jede eine Meßsonde (23, 43) trägt, die zu einer wechselbewegung in Querrichtung in Bezug auf die Vorbeilaufrichtung der Bramme (1) erregt wird, aufweist, dadurch gekennzeichnet, daß sie ferner Mittel (13) zum Halten der Meßsonde (23, 43) jeder Nachweiseinheit (20, 40) in einem konstanten Abstand in Bezug auf die entsprechende Hauptfläche (1a, 1b) der Bramme (1) aufweist.

2. Vorrichtung nach Anspruch 1, dadurch gekennzeichnet, daß jede Nachweiseinheit (20, 40) Mittel (29, 30, 49, 50) zur Regulierung der Lage der Meßsonde (23, 43) in Abhängigkeit vom Oberflächenzustand der entsprechenden Hauptfläche (1a, 1b) der Bramme (1) aufweist.

3. Vorrichtung nach den Ansprüchen 1 und 2, dadurch gekennzeichnet, daß jede Nachweiseinheit (20, 40) durch einen zur Vorbeilaufrichtung der Bramme (1) senkrechten Arm (21, 41), der sich über die gesamte Breite der Bramme erstreckt, gebildet ist, wobei der Arm (21) der ersten Nachweiseinheit (20) über der oberen Hauptfläche (1a) der Bramme (1) und der Arm (41) der zweiten Nachweiseinheit (40) unter der unteren Hauptfläche (1b) der Bramme angeordnet ist.

4. Vorrichtung nach irgendeinem der vorstehenden Ansprüche, dadurch gekennzeichnet, daß jeder Arm (21, 24) in einer zu den Hauptflächen (1a, 1b) der Bramme (1) senkrechten Richtung verschiebbar auf einem Rahmen (10) angebracht ist, der in einer zur Verbeilaufrichtung der Bramme (1) senkrechten Richtung beweglich ist, um die Arme (21, 41) beiderseits der Hauptflächen (1, 1b) der Bramme zu führen.

5. Vorrichtung nach Anspruch 4, dadurch gekennzeichnet, daß jeder Arm (21, 41) mit dem Rahmen (10) durch Schwingarme (22, 42) verbunden ist, die ein Gelenkparallelogramm bilden.

6. Vorrichtung nach irgendeinem der vorstehenden Ansprüche, dadurch gekennzeichnet, daß die Meßsonde (23, 43) jeder Nachweiseinheit (20, 40) quer zur Vorbeilaufrichtung der Bramme (1) durch eine Welle (25, 45) eines Verteilaufbaus angetrieben wird, wobei die Welle in Längsrichtung in dem entsprechenden Arm (21, 41) der Nachweiseinheit (20, 40) angeordnet ist und der Verteilaufbau einen Motor mit konstanter Drehgeschwindigkeit (26, 46) zum Drehen der Welle (25, 45) über ein Getriebe (27, 47) zum Umkehren der Drehrichtung der Welle aufweist.

7. Vorrichtung nach irgendeinem der Ansprüche 1 bis 5, dadurch gekennzeichet, daß die Mittel zum Halten jeder Meßsonde (23, 43) in einem konstanten Abstand in Bezug auf die entsprechende Hauptfläche (1a, 1b) der Bramme (1) durch einen einfach wirkenden Zylinder (13), der die beiden Arme (21, 41) der Nachweiseinheiten (20, 40) miteinander verbindet und einen kontinuierlichen Zug auf die Arme ausübt, und durch eine Anschlageinrichtung (28, 48), die auf jedem Arm (21, 41) angebracht und dazu bestimmt ist, mit der entsprechenden Hauptfläche (1a, 1b) der Bramme (1) in Berührung zu kommen, gebildet sind.

8. Vorrichtung nach irgendeinem der Ansprüche 1 bis 5, dadurch gekennzeichnet, daß die Mittel zur-Regulierung der Lage einer jeden Meßsonde (23, 43) einen auf dem entsprechenden Arm (21, 41) der Nachweiseinheit (20, 40) angebrachten und der Hauptfläche (1a, 1b) der Bramme (1) zugekehrten Fühler (29, 49) und eine durch diesen Fühler gesteuerte elektromechanische Gegenschubwinde (30, 50) aufweisen.

9. Vorrichtung nach Anspruch 8, dadurch gekennzeichnet, daß der Fühler (29, 49) feststehend und durch eine Wirbelstromsonde gebildet ist.

10. Vorrichtung nach Anspruch 8, dadurch gekennzeichnet, daß die Gegenschubwinde (30, 50) einen mit dem Rahmen (10) fest verbundenen feststehenden Teil (30a, 50a) und einen beweglichen Teil (30b, 50b) aufweist, der mit dem Arm (21, 41) der Nachweiseinheit (20, 40), die den Steuerfühler (29, 49) für die Winde aufweist, verbunden ist und auf diesen einwirkt.

11. Vorrichtung nach irgendeinem der vorstehenden Ansprüche, dadurch gekennzeichnet, daß die über der oberen Hauptfläche (1a) angeordnete Meßsonde (23) zwei Sensoren (31) zur Feststellung von Rauhigkeiten auf der Hauptfläche zugeordnet ist, die beiderseits der Meßsonde (23) in Bezug auf die Verschiebungsrichtung derselben angeordnet sind.

12. Vorrichtung nach Anspruch 11, dadurch gekennzeichnet, daß jeder Detektor (31) über den einfach wirkenden Zylinder (13) das Öffnen der Arme (21, 41) der Nachweiseinheiten (20, 40) steuert.

13. Vorrichtung nach Anspruch 3, dadurch gekennzeichnet, daß der über der oberen Hauptfläche (1a) angeordnete Arm (21) der Bramme an seinem zum Rahmen (10) nahen Ende ein Spanngewicht (14) aufweist.

## Claims

1. Device for detecting longitudinal cracks on steel slabs (1) issuing from a continuous casting, by means of measuring probes (23, 43) employing eddy currents fed with an alternating voltage, and means for detecting variations in said voltage indicating the presence of a crack, comprising on each side of the main faces (1a, 1b) of the slab (1), a crack detection unit (20, 40) each carrying a measuring probe (23, 43) which undergoes a transverse reciprocating motion relative to the direction of travel of the slab (1), characterized in that the device further comprises means (13) for maintaining the measuring probe (23, 43) of each detection unit (20, 40) at a constant distance from the corresponding main face (1a, 1b) of the slab (1).

2. Device according to Claim 1, characterized in that each detection unit (20, 40) comprises means (29, 30, 49, 50) for adjusting the position of the measuring probe (23, 43) as a function of the surface state of the corresponding main face (1a, 1b) of the slab (1).

3. Device according to Claims 1 and 2, characterized in that each detection unit (20, 40) is formed by an arm (21, 41) perpendicular to the direction of travel of the slab (1) and extending throughout the width of said slab, the arm (21) of the first detection unit (20) being disposed above the upper main face (1a) of the slab (1) and the arm (41) of the second detection unit (40) being disposed under the lower main face (1b) of said slab.

4. Device according to any one of the preceding claims, characterized in that each arm (21, 41) is mounted to be movable in a direction perpendicular to the main faces (1a, 1b) of the slab (1) on a frame (10) which is movable in a direction perpendicular to the direction of travel of the slab (1) so as to bring said arms (21, 41) each side of the main faces (1, 1b) of said slab.

5. Device according to claim 4, characterized in that each arm (21, 41) is connected to the frame (10) by links (22, 42) forming an articulated parallelogram structure.

6. Device according to any one of the preceding claims, characterized in that the measuring probe (23, 43) of each detection unit (20, 40) is driven transversely relative to the direction of travel of the slab (1) by a shaft (25, 45) of a guiding unit, said shaft being disposed longitudinally in the corresponding arm (21, 41) of said detection unit (20, 40) and said guiding unit comprising a constant-speed motor (26, 46) for rotating the shaft via a transmission box (27, 47) for reversing the direction of rotation of said shaft.

7. Device according to any one of Claims 1 to 5, characterized in that the means for maintaining each measuring probe (23, 43) at a constant distance from the corresponding main face (1a, 1b) of the slab (1) comprise a single-acting jack (13) interconnecting the two arms (21, 41) of the detection units (20, 40) and exerting a continuous traction on said arms, and an abutment means (28, 48) mounted on each arm (21, 41) and adapted to come into contact with the corresponding main face (1a, 1b) of the slab (1).

8. Device according to any one of Claims 1 to 5, characterized in that the means for adjusting the position of each measuring probe (23, 43) comprise a sensor (29, 49) mounted on the corresponding arm (21, 41) of the detection unit (20, 40) and disposed opposite the main face (1a, 1b) of the slab (1), and an electromechanical counter-thrust jack (30, 50) controlled by said sensor.

9. Device according to Claim 8, characterized in that said sensor (29, 49) is fixed and is formed by an eddy current probe.

10. Device according to Claim 8, characterized in that the counter-thrust jack (30, 50) comprises a fixed part (30a, 50a) fixed to the frame (10) and a movable part (30b, 50b) connected to and acting on the arm (21, 41) of the detection unit (20, 40) comprising the sensor (29, 49) controlling said jack.

11. Device according to any one of the preceding claims, characterized in that the measuring probe (23) disposed above the upper main face (1a) is associated with two detectors (31) of bumps on said main face and disposed on each side of said measuring probe (23) relative to the direction of displacement of the latter.

12. Device according to claim 11, characterized in that each detector (31) controls via the single-acting jack (13) the opening of the arms (21, 41) of the detection units (20, 40).

13. Device according to Claim 3, characterized in that the arm (21) disposed above the upper main face (1a) of the slab comprises a counterweight (14) at its end close to the frame (10).
